# EUROPEAN PATENT APPLICATION

(11) **EP 2 845 838 A1**
(43) Date of publication of application: **11.03.2015**
(21) Application number: 13182933.5
(22) Date of filing: 04.09.2013
(51) Int. Cl.: C01B 31/04

(54) **Purification process for graphene nanoribbons**

(71) Applicant: BASF SE, 67056 Ludwigshafen (DE)
(72) Inventor: Hintermann, Tobias, 4106 Therwil (CH); Schwab, Matthias Georg, 68199 Mannheim (DE); Cha, Kitty Chih-Pei, 67063 Ludwigshafen (DE); Weitz, Thomas, 68163 Mannheim (DE); Schäfer, Ansgar, 76199 Karlsruhe (DE); Müller, Imke, 69118 Heidelberg (DE)
(74) Representative: Maiwald Patentanwalts GmbH

(57) **Abstract**

The present invention relates to a process for purifying graphene nanoribbons, which comprises
- bringing into contact a composition comprising graphene nanoribbons GNR1 and one or more contaminants with a liquid medium comprising a dispersant, and dispersing the graphene nanoribbons GNR1 in the liquid medium so as to obtain a liquid dispersion of the graphene nanoribbons GNR1,
- subjecting the liquid dispersion of the graphene nanoribbons GNR1 to a separation treatment so as to at least partly remove the one or more contaminants, thereby obtaining a liquid dispersion of purified graphene nanoribbons GNR1.

## Description

The present invention relates to a purification method for graphene nanoribbons and to a liquid dispersion comprising purified graphene nanoribbons.

Graphene, an atomically thin layer from graphite, has received considerable interest in physics, material science and chemistry since the recent discovery of its appealing electronic properties. These involve superior charge carrier mobility and the quantum Hall effect. Moreover, its chemical robustness and material strength make graphene an ideal candidate for applications ranging from transparent conductive electrodes to devices for charge and energy storage.

Graphene nanoribbons (GNRs) are promising building blocks for composite materials and novel graphene based electronic devices. Beyond the most important distinction between metallic zig-zag edge (ZGNR) with interesting electron spin properties and predominantly semiconducting armchair edge ribbons (AGNR), more general variations of the geometry of a GNR allow for gap tuning through one-dimensional (1D) quantum confinement. In general, increasing the ribbon width leads to an overall decrease of the band gap, with superimposed oscillation features that are maximized for armchair GNRs (AGNRs).

Graphene nanoribbons are one dimensional (linear) structures that are derived from the parent two dimensional graphene lattice. Their characteristic feature is high shape-anisotropy due to the increased length to width ratio. The structural basis of GNRs is a hexagonal sp² hybridized carbon network which is terminated at the edges either by hydrogen atoms or any other organic or inorganic substituent. Currently, their usage in yet smaller, flatter and faster carbon-based devices and integrated circuits is being widely discussed in materials science.

Standard top-down fabrication techniques of GNR such as cutting graphene sheets e.g. using lithography, unzipping of carbon nanotubes (e.g. described in US2010/0047154 and US2011/0097258), or using nanowires as a template (e.g. described in KR2011/005436) are not suitable for ribbons narrower than 5-10 nm, because the edge configuration is not precisely controlled and they do not yield ribbons with a monodisperse width distribution. For high-efficiency electronic devices, the width of the ribbons need to be narrower than 10 nm, their width needs to be precisely controlled and, importantly, their edges need to be smooth because even minute deviations from the ideal edge shapes seriously degrade the electronic properties.

Due to the inherent limitations of lithographic methods and of other known approaches to fabricate graphene nanostructures, however, the experimental realization of GNRs with the required high precision has remained elusive. Bottom-up approaches based on cyclodehydrogenation reactions in solution (e.g. Dössel, L.; Gherghel, L.; Feng, X.; Müllen, K. Angew. Chem. Int. Ed. 50, 2540-2543 (2011)) or on solid substrates (e.g. Cai, J.; et al. Nature 466, 470-473 (2010)) have recently emerged as promising routes to the synthesis of nanoribbons and nanographenes with precisely controlled structures.

At least two general types of precisely controlled linear nanoribbon structures can be distinguished. In a first type, the edges are forming a straight line along the nanoribbon, while in another type, sometimes called 'chevron' type or 'graphitic nanowiggles' (described e.g. in Phys. Rev. Lett. 2011 (107), 135501), the edges are lying on a corrugated or saw-toothed line. The latter case can also be described as a periodic repetition of nonaligned graphitic nanoribbon domains seamlessly stitched together without structural defects.

The edges of the graphene nanoribbons may be substituted either with hydrogen atoms and/or with any other organic or inorganic groups.

In solution-based approaches starting from oligophenylene precursors, a polymer is typically prepared in a first step which is subsequently converted into the graphitic structure, e.g. by Scholl-type oxidative cyclodehydrogenation.

J. Wu, L. Gherghel, D. Watson, J. Li, Z. Wang, C.D. Simpson, U. Kolb, and K. Müllen, Macromolecules 2003, 36, 7082 - 7089 report the synthesis of graphitic nanoribbons obtained by oxidative cyclodehydrogenation of soluble branched polyphenylenes. Y. Fogel, L. Zhi, A. Rouhanipour, D. Andrienko, H.J. Räder, and K. Müllen, Macromolecules 2009, 42, 6878 - 6884 report the synthesis of a homologous series of five monodisperse ribbon-type polyphenylenes, with rigid dibenzopyrene cores in the repeat units, by microwave-assisted Diels-Alder reaction. The size of the obtained polyphenylene ribbons ranges from 132 to 372 carbon atoms in the aromatic backbone which incorporates up to six dibenzopyrene units. M. G. Schwab et al. (J. Am. Chem. Soc. 2012, 134, 18169) have prepared structurally defined GNRs with high lateral extension by Yamamoto type polycondensation followed by cyclodehydrogenation and WO2012/149257 describes the synthesis of structurally controlled GNR via poly(phenylene ethynylene) intermediates.

All these solution based methods have so far only led to poorly soluble and hardly dispersible agglomerates of graphene nanoribbons which prevents efficient purification and processing of the graphene ribbons, e.g. for incorporation into electronic devices or composite materials. Typically, after cyclodehydrogenation the graphene nanoribbons precipitate from the solvent they were prepared in and can be collected as a black, graphitic bulk material.

In KR101082335B, the preparation of a structurally controlled GNR and the use of the material for the fabrication of a thin film transistor by aerosol jet printing technology are described. However purification of the GNR material is not reported and the solubility of the GNR is low (0.2 wt% in THF).

GNR compositions in organic solvents have also been described by M. G. Schwab et al. (J. Am. Chem. Soc. 2012, 134, 18169) for measuring UV/vis spectra of controlled bottom-up graphene nanoribbons.

A surface-confined (also referred to as "surface-assisted") bottom-up approach to controlled graphene nanoribbons has been described in J. Cai et al., Nature 466, pp. 470-473 (2010) and in number of publications since then (e.g. S. Blankenburg et al., ACS Nano 2012, 6, 2020; S. Linden et al., Phys. Rev. Lett. 2012, 108, 216801). However, it was not reported that these graphenene nanoribbons being present on the metal surface on which they were prepared might be subjected to any further treatment such as a purification or dispersion treatment.

As mentioned above, graphene nanoribbons are promising building blocks for novel graphene based electronic devices. For these applications, the graphene nanoribbons need to be of high purity. However, in the presently known preparation methods, contaminants are produced as well. So, any as-synthesized GNR composition inevitably contains contaminants which need to be removed before using the purified GNR composition in an electronic device manufacturing process.

Typically, in an electronic device manufacturing process, graphene nanoribbons are deposited on a substrate (such as a coated Si wafer). Preferably, the graphene nanoribbons deposited on the substrate should provide a uniform and flat structure. Apart from high purity (i.e. no contaminants which may disrupt the uniform structure), this typically means that any uncontrolled aggregation of graphene nanoribbons (e.g. individual graphene nanoribbons sticking together and thereby forming GNR bundles of undefined structure) should be suppressed as much as possible. It would be beneficial to have graphene nanoribbons which have been purified from contaminants and are present in individualized form (i.e. no uncontrolled aggregation of single graphene nanoribbons) and remain in such an individualized form when applied onto a substrate.

It is an object of the present invention to provide a purification method for graphene nanoribbons which is easy to perform and results in purified graphene nanoribbons that can be deposited on a substrate in a controlled and well-defined manner.

According to a first aspect of the present invention, the object is solved by a process for purifying graphene nanoribbons, which comprises
- bringing into contact a composition comprising graphene nanoribbons GNR1 and one or more contaminants with a liquid medium comprising a dispersant, and dispersing the graphene nanoribbons GNR1 in the liquid medium so as to obtain a liquid dispersion of the graphene nanoribbons GNR1,
- subjecting the liquid dispersion of the graphene nanoribbons GNR1 to a separation treatment so as to at least partly remove the one or more contaminants, thereby obtaining a liquid dispersion of purified graphene nanoribbons GNR1.

In the present invention, it has been realized that there is a strong interaction between graphene nanoribbons and dispersants which can be used not only for stabilizing the graphene nanoribbons in a liquid (preferably aqueous) medium but also for separating the graphene nanoribbons from undesired contaminants which may result from the graphene nanoribbon preparation method. The one or more contaminants are either not sufficiently interacting with the dispersant(s) for getting dispersed, or show a level of interaction with the dispersant(s) which is different from the level of interaction between the graphene nanoribbons GNR1 and the dispersant(s). This different level of interaction makes it possible to separate the contaminants and obtain a dispersion of purified graphene nanoribbons GNR1.

In the present invention, the term "graphene nanoribbons" is used according to its commonly accepted meaning and therefore relates to one dimensional (linear) structures that are derived from the parent two dimensional graphene lattice. Their characteristic feature is high shape-anisotropy due to the increased length to width ratio. The structural basis of GNRs is a hexagonal sp² hybridized carbon network which is terminated at the edges either by hydrogen atoms or any other organic or inorganic substituent. Typically, the aromatic basal plane of graphene nanoribbons is in the form of a strip typically having a width of less than 50 nm or even less than 10 nm (e.g. measured via scanning tunneling microscopy STM). Typically, the aspect ratio of graphene nanoribbons (i.e. ratio of length to width) is at least 10. Ideally, it is a one-atom-thick layer material.

In principle, the composition comprising the graphene nanoribbons GNR1 to be purified (i.e. the "target" graphene nanoribbons to be separated from other materials being present in the composition) can be provided by top-down preparation methods or bottom-up preparation methods. In both of these preparation methods, compositions are obtained which do not exclusively consist of the desired target graphene nanoribbons GNR1 but also contain contaminants.

Standard top-down fabrication techniques are known to the skilled person and include cutting graphene sheets e.g. using lithography, unzipping of carbon nanotubes (e.g. described in US2010/0047154), or using nanowires as a template (e.g. described in KR2011/005436).

By using bottom-up preparation methods, graphene nanoribbons of well-defined width and edge structure are obtainable, as known to the skilled person. In one of these bottom-up approaches, precursor molecules (such as polycyclic aromatic compounds or oligophenylene compounds) are provided and linked to each other so as to form a precursor polymer which is then subjected to a cyclodehydrogenation reaction, carried out either in solution or on solid substrates (i.e. surface-assisted cyclodehydrogenation), as described e.g. by Dössel, L.; Gherghel, L.; Feng, X.; Müllen, K. Angew. Chem. Int. Ed. 50, 2540-2543 (2011) and Cai, J.; et al. Nature 466, 470-473 (2010), WO 2013/093756 A1, and WO 2013/072292 A1. Similar to conventional polymers, the structure of such well-defined graphene nanoribbons obtained from specific precursor molecules can be described by a repeating unit.

At least two general types of precisely controlled linear nanoribbon structures can be distinguished. In a first type, the edges are forming a straight line along the nanoribbon, while in another type, sometimes called 'chevron' type or 'graphitic nanowiggles' (described e.g. in Phys. Rev. Lett. 2011 (107), 135501), the edges are lying on a corrugated or saw-toothed line. The latter case can also be described as a periodic repetition of nonaligned graphitic nanoribbon domains seamlessly stitched together without structural defects. Both types of graphene nanoribbons can be subjected to the purification method of the present invention.

It has been realized that the purification method of the present invention is in particular suitable for purifying graphene nanoribbons which have been prepared by a bottom-up preparation method and therefore have a well-defined structure (i.e. a structure that can be described by a repeating unit).

Accordingly, in a preferred embodiment, the composition comprising the graphene nanoribbons GNR1 has been obtained by a bottom-up preparation method.

Preferably, the graphene nanoribbons GNR1 comprise a repeating unit.

Preferably, the graphene nanoribbons GNR1 or at least a segment of each of these graphene nanoribbons are made of [RU]ₙ, wherein RU is a repeating unit and 2≤n≤2500.

Similar to conventional polymers, graphene nanoribbons of defined structure can have their specific repeating units. The term "repeating unit" relates to the part of the nanoribbon whose repetition would produce either the complete ribbon (except for the ends) or, if the GNR is made of two or more segments (i.e. similar to the blocks of a block copolymer), one of these segments (except for the ends). The term "repeating unit" presupposes that there is at least one repetition of said unit. In other words, if the repeating unit is referred to as RU, the GNR or one of its segments is made of n repeating units RU with n≥2 (i.e. (RU)ₙ with n≥2). The upper limit depends on the desired final properties of the graphene nanoribbon and/or the process conditions, and can be e.g. n≤2500.

The graphene nanoribbons GNR1 may comprise just one type of repeating unit RU or may comprise two or more segments or blocks, each segment or block being made of its specific repeating unit RU1, RU2, .... etc. Segmented graphene nanoribbons are described e.g. in WO 2013/072292 A1.

Preferably, the composition comprises graphene nanoribbons GNR1 having a repeating unit which is derived from at least one substituted or unsubstituted polycyclic aromatic monomer compound, and/or from at least one substituted or unsubstituted oligophenylene aromatic monomer compound.

The polycyclic aromatic monomer compound can be a polycyclic aromatic hydrocarbon monomer compound. Exemplary polycyclic aromatic hydrocarbon monomer compounds are disclosed e.g. in WO 2013/072292 A1.

Alternatively, the polycyclic aromatic monomer compound may comprise at least one heterocyclic ring, in particular two or more annelated aromatic rings and at least one of the annelated aromatic rings comprises one or more heteroatoms. By using such polycyclic aromatic monomer compounds which comprise at least one heterocyclic ring, graphene nanoribbons of defined structure having a heteroatomic substitution modification are obtainable. A heteroatomic substitution modification means the replacement of at least one carbon atom in the hexagonal sp² hybridized carbon network with at least one heteroatom or heteroatomic group. The substitution may be anywhere within the graphene hexagonal sp² hybridized carbon network. Exemplary heteroatoms or heteroatomic groups include e.g. nitrogen, boron, phosphor and its oxides, silicon, oxygen, sulphur and its oxides, hydrogen, or any combination thereof. Further details about such heteroatomic modified graphene nanoribbons are disclosed e.g. in EP 12 169 326 and in Angew. Chem., International Edition (2013), 52(16), 4422-4425.

The oligophenylene aromatic monomer compound can be an oligophenylene aromatic hydrocarbon monomer compound. Exemplary oligophenylene aromatic hydrocarbon monomer compounds are disclosed e.g. in WO 2013/072292 A1 and WO 2013/093756 A1.

Alternatively, the oligophenylene aromatic monomer compound may comprise at least one heterocyclic ring. By using such aromatic monomer compounds which comprise at least one heterocyclic ring, graphene nanoribbons of defined structure having a heteroatomic substitution modification are obtainable. Further details about such heteroatomic modified graphene nanoribbons are disclosed e.g. in EP 12 169 326 and in Angew. Chem., International Edition (2013), 52(16), 4422-4425.

So, the graphene nanoribbons GNR1 can be graphene nanoribbons having a repeating unit which comprises at least one heteroatomic substitution modification.

The graphene nanoribbons GNR1 may also be graphene nanoribbons having a repeating unit which comprises at least one vacancy modification. Further details about such graphene nanoribbons having well-defined vacancy modifications are disclosed e.g. in EP 12 169 326.

The composition comprising the graphene nanoribbons GNR1 can be an "as-synthesized" composition, i.e. a composition as directly obtained from the graphene nanoribbon preparation process without any post-treatment steps before being brought into contact with the liquid medium comprising a dispersant.

So, if the graphene nanoribbons are prepared by a solution-based process, said as-synthesized reaction solution may in principle be directly brought into contact with the liquid dispersant medium. If the graphene nanoribbons are prepared by a surface assisted process and therefore obtained on a substrate, it is possible to bring said as-synthesized assembly of substrate and graphene nanoribbons into contact with the liquid dispersant medium.

Alternatively, it may be preferred that the composition comprising the graphene nanoribbons GNR1 is subjected to a purification pre-treatment before being brought into contact with the liquid medium comprising a dispersant. In the purification pre-treatment, the amount of undesired contaminants is reduced to some extent so as to improve efficiency of the main purification step.

The purification pre-treatment may include commonly known purification steps such as filtration, chromatography, treatment with a solvent, preferably an organic solvent (e.g. for washing out contaminants), treatment with an acidic or basic solution, centrifugation, thermal treatment, electrophoresis, sedimentation, or any combination thereof.

The form of the GNR1-containing composition to be brought into contact with the liquid dispersant medium is not critical. The GNR1-containing composition can be provided e.g. as a powder composition, a liquid composition, a solid substrate with the graphene nanoribbons GNR1 being on the surface of the substrate, or combinations thereof.

As mentioned above, with the presently known graphene nanoribbon preparation methods, compositions are obtained which do not exclusively consist of the desired target graphene nanoribbons but also contain contaminants.

The term "contaminant" refers to those components of the GNR composition which have a structure and properties different from the "target" graphene nanoribbons GNR1 to be purified. Depending on the preparation method used, the kind of contaminants may vary. Typical contaminants of a graphene nanoribbon preparation method (e.g. a method preparing GNRs via cyclodehydrogenation, either in a solution-based process or a surface-assisted process) include non-reacted precursor molecules, non-reacted precursor polymers, polymeric reaction products having no graphene nanoribbon structure, agglomerates (e.g. agglomerated particles resulting in an agglomerate structure which is too large for being effectively dispersed), solid substrates, and/or metal residues (e.g. originating from the catalyst). In the GNR preparation method using surface-assisted cyclodehydrogenation of precursor polymers, the solid substrate on which the graphene nanoribbons GNR1 are provided represents a contaminant as well.

Typically, the contaminants are non-GNR-materials. However, the contaminants may also comprise graphene nanoribbons GNR2 which differ in at least one property from the graphene nanoribbons GNR1.

Similar to the graphene nanoribbons GNR1, the graphene nanoribbons GNR2 can be obtained either by top-down or bottom-up preparation methods. With regard to further details of these preparation methods, reference can be made to the statements made above when discussing preparation methods of GNR1.

Typically, the graphene nanoribbons GNR2 represent a by-product generated during the preparation of the graphene nanoribbons GNR1. Depending on the intended final application of the graphene nanoribbons GNR1 (e.g. in electronic devices), it might be preferred not only to remove the non-graphene nanoribbon contaminants but also graphene nanoribbon by-products having undesired properties in view of the intended final application.

However, in principle, it is also possible that the graphene nanoribbons GNR1 and GNR2 have been prepared in two separate processes and blended with each other at a later stage.

Similar to the graphene nanoribbons GNR1, the graphene nanoribbons GNR2 can have a well defined structure, i.e. a structure comprising a repeating unit RU.

The graphene nanoribbons GNR1 and GNR2 differ at least in one property, such as ribbon width, ribbon length, ribbon-edge-located substituents, degree of cyclodehydrogenation (thereby having different extensions of the aromatic system in the basal plane of the graphene nanoribbons), repeating unit, number of ribbon segments or ribbon blocks, heteroatomic substitution modification, vacancy modification, or any combination thereof.

As will be discussed below in further detail, the degree of interaction between the dispersant and the graphene nanoribbons GNR1 differs from the one between the dispersant and the graphene nanoribbons GNR2, which in turns makes it possible to at least partly separate the graphene nanoribbons GNR1 and GNR2 from each other and obtain a liquid dispersion of purified graphene nanoribbons GNR1.

The GNR1-containing composition is brought into contact with a liquid medium comprising a dispersant, and the graphene nanoribbons are dispersed in the liquid medium so as to obtain a liquid dispersion of purified graphene nanoribbons GNR1.

In the present invention, dispersants commonly known to the skilled person can be used. Based on his common general knowledge, the skilled person knows what kind of compounds are acting as a dispersant.

Appropriate liquids that can be used in combination with a specific dispersant are known to the skilled person. As an example, the liquid medium can be an aqueous medium which may optionally comprise a polar organic liquid such as an alcohol. So, in a preferred embodiment, the liquid medium is an aqueous medium. Alternatively, the liquid component can be an organic liquid, preferably a polar organic liquid such as an alcohol.

Depending on the properties of the graphene nanoribbons GNR1 and the type of dispersant, the weight ratio of graphene nanoribbons GNR1 to dispersant may vary over a broad range. The amount of dispersant needs to be high enough so as to sufficiently interact with the graphene nanoribbons GNR1 and disperse the graphene nanoribbons GNR1 in the liquid medium. Appropriate amounts of dispersant can be established by the skilled person on the basis of routine experimentation.

The invention provides purified graphene nanoribbons that are dispersed in solution, preferably singly dispersed, i.e. preferably as individualized dispersant-coated graphene nanoribbons. A number of dispersants may be used for this purpose wherein the dispersant is associated with the graphene nanoribbon by covalent or noncovalent means. The dispersant should preferably substantially cover the length of the nanoribbon, preferably at least half of the length of the nanoribbon, more preferably substantially all of the length. The dispersant can be associated in a periodic manner with the nanoribbon.

The dispersing agents are typically synthetic or naturally occurring detergents or any other composition capable of encapsulating and suitably solubilizing hydrophobic compounds in solutions. Exemplary dispersing agents include, without limitation, synthetic or naturally occurring detergents having nonionic or anionic surfactant activities such as: alkylaryl polyether alcohols, e.g. octylphenol-polyethylene glycol ether, commonly sold under the tradename, Triton® X-100 (hereinafter referred to as "TX-100") (Sigma-Aldrich, St. Louis, Mo.); phenylated polyethoxy ethanols, e.g. (nonylphenoxy) polyethoxy ethanol commonly sold as Nonidet P-40/NP-40 (Vysis, Inc., Downers Grove, Ill.)(hereinafter "NP-40"); polyoxyethylene sorbitol esters, e.g., TWEEN®, manufactured by ICI Americas, Inc., Bridgewater, N.J. and EMASOL™, manufactured by Kao Specialties Americas LLC, High Point, N.C.; sodium dodecyl sulfate (hereinafter "SDS"); and ammonium bromides and chlorides (e.g., cetyltrimethylammonium bromide, tetradecylammonium bromide and dodecylpyrimidium chloride). Other dispersing agents include, without limitation, naturally occurring emulsifying agents such as deoxycholates and deoxycholate-type detergents (e.g., taurocholic acid) and cyclodextrins (e.g., α-, β- or γ-cyclodextrin), chaotropic salts such as urea and guanidine, and ion paring agents such as sulfonic acids (e.g., 1-heptanesulfonic acid and 1-octane-sulfonic acid).

Naturally occurring emulsifying agents such as taurocholic acid and cyclodextrins are highly effective in solubilizing and dispersing GNR structures in water and in facilitating derivatization of the purified and isolated GNR structures. In particular, cyclodextrins have a three dimensional doughnut shaped orientation with a "torsional" structure composed of glucopyranose units. The "torsional" structure of a cyclodextrin molecule allows it to attract and encapsulate a GNR structure within its central hydrophobic region, even when physically altered from a round "doughnut" shape to a twisted "doughnut" shape, while maintaining an outer hydrophilic surface rendering the molecule soluble in aqueous solutions. The solubility of cyclodextrins in water may also be increased nearly tenfold by substitution of, for example, methyl or hydroxypropyl groups on the cyclodextrin molecule. Greater solubility of the cyclodextrin in water translates to a greater dispersion and isolation of individual GNR structures in solution.

Taurocholic acid ("TA"), which is exemplary of a suitable deoxycholate-type detergent capable of substantially dispersing GNR structures in solution, is produced naturally in mammalian liver tissue. It is also highly effective in facilitating biological derivatization of purified and isolated GNR structures because, like the cyclodextrins, TA has a molecular shape that allows a large surface area of GNR structures to be coated per molecule of TA. Typically, cyclodextrins and deoxycholates may be utilized to suitably disperse GNR structures according to the present invention in concentrations ranging from about 1 mg/ml to about 1000 mg/ml of the aqueous solution.

In the present invention, it is also possible to use DNA (deoxyribonucleic acid), RNA (ribonucleic acid) and/or proteins as a dispersant for dispersing the graphene nanoribbons GNR1 in the liquid medium.

Synthetic detergents suitable for use as a dispersant will typically have high surfactant activity. The amount of detergent or surfactant can vary over a broad range. In principle, the surfactant can be used in an amount which is below, above or equal to its critical micelle concentration (hereinafter "CMC"). If below its CMC, the amount of surfactant can be e.g. in the range of 0.5xCMC to 0.95xCMC. On the other hand, if above its CMC, the amount of surfactant can be as high as e.g. 10xCMC. These high surfactant detergents are capable of overcoming hydrophobic forces at the GNR surface/aqueous solution interface by coating the GNR structures to establish suitable solubility of the GNR structures in solution. As appreciated by those of skill in the art, the surfactant properties of a synthetic detergent or surfactant may be characterized in terms of a hydrophilic-lipophilic balance (hereinafter "HLB"), which provides a measurement of the amount of hydrophilic groups to hydrophobic groups present in a detergent molecule. In particular, synthetic detergents or surfactants that are suitable for use as dispersing agents here have an HLB value between about 7 and about 13.2.

Additionally, chaotropic salts (e.g., urea and guanidine) are typically utilized as dispersing agents in concentrations ranging from about 6 M to about 9 M in solution (wherein "M" refers to molarity), whereas ion pairing agents are typically utilized as dispersing agents in concentrations ranging from about 1 mM to about 100 mM in solution.

Suitable anionic surfactants are for example alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are for example alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are homo- or copolymers of vinylpyrrolidone, vinylalcohols, or vinylacetate.

Suitable cationic surfactants are for example quaternary surfactants, for example quaternary ammonium compounds with one or two hydrophobic groups, or salts of long-chain primary amines.

Suitable amphoteric surfactants are e.g. alkylbetains and imidazolines.

Suitable block copolymers acting as a dispersant are e.g. block copolymers of the A-B or A-B-A type comprising blocks of polyethylene oxide and polypropylene oxide, or of the A-B-C type comprising alkanol, polyethylene oxide and polypropylene oxide.

Suitable polyelectrolytes acting as a dispersant are e.g. polyacids or polybases. Examples of polyacids are alkali salts of polyacrylic acid or polyacid comb polymers. Examples of polybases are polyvinylamines or polyethyleneamines.

The dispersant molecules typically surround individual GNR structures and efficiently separate those structures from bundles or stacks of ribbons in solution and act as spacer between individually dispersed GNR to prevent their reagglomeration.

The one or more contaminants are either not interacting with the dispersant(s) or show a level of interaction with the dispersant(s) which is different from the level of interaction between the graphene nanoribbons GNR1 and the dispersant(s).

Typically, the interaction between the contaminants which are not graphene nanoribbons and the dispersant(s) is quite weak so that these contaminants flocculate spontaneously in the liquid dispersant medium or can easily be separated from the liquid phase by appropriate separation steps such as centrifugation.

The GNR1-containing composition to be purified may also contain at least one contaminant which is interacting with the dispersant(s) sufficiently strong so as to be dispersed in the liquid medium. As already discussed above, the composition to be purified may contain graphene nanoribbons GNR2 which were generated as a by-product during the preparation of the graphene nanoribbons GNR1 and have one or more undesired properties in view of the intended final use (e.g. in electronic devices). However, as the interaction between this type of contaminant (e.g. GNR2) and the dispersant(s) is different from the interaction between the "target" graphene nanoribbons GNR1 and the dispersant(s), a separation of these dispersed fractions is possible, as will be discussed below in further detail.

Due to the strong interaction between the graphene nanoribbons GNR1 and the dispersant, the graphene nanoribbons GNR1 are dispersed in the liquid medium, and a liquid dispersion of the graphene nanoribbons GNR1 is obtained.

Dispersing the graphene nanoribbons GNR1 in the liquid medium can be supported or facilitated by appropriate treatment steps known to the skilled person. In a preferred embodiment, the graphene nanoribbons GNR1 are dispersed in the liquid medium under stirring, mechanical agitation, ultra-sonication, heating, milling, or any combination of these treatment steps.

Ultrasonication is commonly known to the skilled person and may include e.g. bath ultrasonication, probe ultrasonication and/or cup-horn ultrasonication. The intensity (i.e. energy input) of the ultrasonic treatment can vary over a broad range. In the present invention, it is possible to apply a high intensity ultrasonic treatment such as probe ultrasonication and/or cup-horn ultrasonication. In particular when using graphene nanoribbons of well-defined structure (preferably a structure defined by a repeating unit RU), it has been realized that a high intensity ultrasonic treatment and/or an ultrasonic treatment over a prolonged time period can be applied while leaving the GNR structure intact (i.e. no ribbon breakage or rupture). So, in a preferred embodiment, the graphene nanoribbons GNR1 are dispersed in the liquid medium under ultra-sonication, wherein the ultrasonication comprises a probe ultrasonication or a cup-horn ultrasonication or a combination thereof.

If the GNR1-containing composition results from a surface-assisted manufacturing method and therefore contains graphene nanoribbons GNR1 applied on a substrate, the liquid dispersant medium and the GNR1-containing composition are brought into contact under conditions which make sure that the graphene nanoribbons GNR1 are removed from the substrate surface. Releasing the graphene nanoribbons GNR1 from the substrate surface can be improved by appropriate treatment steps such as stirring, mechanical agitation, ultra-sonication (preferably a high intensity ultrasonic treatment such as probe ultrasonication and/or cup-horn ultrasonication), heating, or any combination of these treatment steps.

The amount of graphene nanoribbons GNR1 dispersed in the liquid medium can vary over a broad range, and may be as high as 100 mg or 50 mg of GNR1/ml of liquid dispersant medium.

As indicated above, the liquid dispersion of the graphene nanoribbons GNR1 is subjected to a separation treatment so as to at least partly remove the one or more contaminants, thereby obtaining a liquid dispersion of purified graphene nanoribbons GNR1.

The separation treatment may include one or more separation steps. Commonly known separation steps such as filtration, centrifugation, density gradient centrifugation (e.g. density gradient ultra-centrifugation), chromatography, electrophoresis, sedimentation, or any combination thereof can be applied.

As already indicated above, some contaminants are typically not dispersed in the liquid medium and therefore flocculate. The flocculated contaminants can be separated from the dispersed graphene nanoribbons GNR1 by filtration. By selecting a filter having an appropriate pore size or mesh size, the dispersed graphene nanoribbons run through the filter whereas the flocculated contaminants are collected on the filter. Depending on the type of contaminants to be separated and the graphene nanoribbons GNR1 to be purified, the filter pore size or mesh size may vary over a broad range, e.g. from 0.01 µm to 1.0 µm, more preferably from 0.05 µm to 0.5 µm, or from 0.1 µm to 0.4 µm.

Alternatively or in combination with the filtration, the liquid dispersion of the graphene nanoribbons GNR1 can be subjected to centrifugation. Those contaminants which are not sufficiently interacting with the dispersant will flocculate and sediment under centrifugation conditions, whereas the graphene nanoribbons GNR1 will remain in a dispersed state. Subsequently, the flocculated and sedimented contaminants can be separated from the supernatant dispersion, e.g. by filtration or decantation.

According to another preferred embodiment, the separation treatment includes a chromatography step. The dispersed graphene nanoribbons GNR1 remain in the liquid mobile phase, whereas at least some of the contaminants are adsorbed on the stationary phase. The separation principle may be based e.g. on size exclusion effects (gel permeation chromatography (GPC)) or polarity differences (HPLC) or combinations thereof. So, in a preferred embodiment, the separation treatment includes a gel permeation chromatography (GPC) step. The dispersed graphene nanoribbons GNR1 can thus be separated from contaminants that have a differing 'effective size in solution'. According to another preferred embodiment, the separation treatment includes a high-performance liquid chromatography (HPLC) step.

According to another preferred embodiment, the separation treatment includes density gradient centrifugation. As known to the skilled person, the basic concept of density gradient centrifugation is that a mixture to be separated is placed onto the surface of a vertical column of liquid, the density of which progressively increases from top to bottom, and then centrifugation is started. Different kinds of density gradient centrifugation can be used in the present invention. Just as an example, rate-zonal separation can be used. As known to the skilled person, in rate-zonal separation, components of a mixture are separated based on their size and mass. This means that they migrate through the gradient according to these properties, which allows their separation into distinct zones or bands. Alternatively, isopycnic separation can be used. As known to the skilled person, in isopycnic separation the particles migrate through the liquid density gradient until they reach the point where their buoyant density is equal to that of the gradient. Separation via density gradient centrifugation might be of particular interest if at least one of the contaminants is well dispersed in the liquid medium but the degree of interaction between said contaminant and the dispersant is different from the degree of interaction between the graphene nanoribbons GNR1 and the dispersant. This may be the case if said contaminant is a graphene nanoribbon GNR2.

As a result of said one or more separation steps, a liquid dispersion of purified graphene nanoribbons GNR1 is obtained.

Optionally, the liquid dispersion of purified graphene nanoribbons GNR1 can be subjected to one or more post-treatment steps, e.g. for removing excess dispersant (such as dispersant not being adsorbed on the graphene nanoribbons GNR1). Such post-treatment steps include e.g. filtration with a small pore size or mesh size filter and re-dispersing in another liquid medium (preferably aqueous medium), chromatography, dialysis, or any combination thereof. In the post-treated liquid dispersion, the graphene nanoribbons GNR1 are still present in a dispersed state, i.e. coated with a dispersant.

According to a further aspect, the present invention provides a liquid dispersion of purified graphene nanoribbons GNR1, which is obtainable or obtained by the purification method described above.

As a result of the method described above wherein graphene nanoribbons GNR1 are dispersed in a first step in a liquid dispersant medium, followed by subjecting the GNR1 dispersion to one or more separation steps so as to obtain a purified GNR1 dispersion, individualized dispersant-coated graphene nanoribbons GNR1 are obtainable.

Thus, in a preferred embodiment, the liquid dispersion of purified graphene nanoribbons GNR1 comprises individualized dispersant-coated graphene nanoribbons GNR1.

An individualized graphene nanoribbon is not in direct contact with another graphene nanoribbon. In other words, each of the individualized graphene nanoribbons has its own dispersant coating which prevents it from coming into direct contact and aggregating with other non-dispersant-coated graphene nanoribbons. This does not exclude that the dispersant coatings of two individualized graphene nanoribbons may contact each other.

Whether or not individualized graphene nanoribbons have been formed can be verified by analytical methods known to the skilled person after deposition on a surface, such as atomic force microscopy, transmission electron microscopy, or scanning tunneling microscopy.

Preferably, at least 50 % of the purified graphene nanoribbons GNR1 are individualized dispersant-coated graphene nanoribbons. More preferably, at least 80 %, even more preferably at least 95 % of the purified graphene nanoribbons GNR1 are individualized dispersant-coated graphene nanoribbons.

The amount of purified graphene nanoribbons GNR1 being present in the liquid dispersion may vary over a broad range. The liquid dispersion may contain the purified graphene nanoribbons GNR1 in an amount of e.g. from 0.0001 wt% to 10 wt% or 0.001 wt% to 5 wt%.

Depending on the type of dispersant and the properties of the graphene nanoribbon GNR1, the weight ratio of dispersant to purified graphene nanoribbons GNR1 may vary over a broad range, e.g. from 1/10 to 10000/1 or 1/10 to 1000/1 or 1/10 to 100/l.

According to a further aspect, the present invention provides a process for depositing graphene nanoribbons, which comprises:
- providing a liquid dispersion of purified graphene nanoribbons GNR1 according to the process described above, and
- depositing the purified graphene nanoribbons GNR1 on a substrate.

The graphene nanoribbons GNR1 can be deposited on the substrate by methods commonly known to the skilled person, such as spin coating, drop casting, zone casting, immersion coating, dip coating, blade coating, spraying, printing, or any combination thereof.

In some situations, it might be useful to immobilize or affix the GNRs to the surface of the substrate. This may be a first step in device fabrication or may be useful in GNR cutting methods.

The GNRs can be dried so as to affix them to the surface of the substrate. Alternatively, the GNRs can be dried prior to washing the surface. Drying can be accomplished by any means that does not damage the nanoribbons. One preferred method is by passing a stream of gas over the substrate. Any gas may be used that is not reactive with the substrate or nanoribbons.

After drying, the dispersant may be removed from the nanoribbons by any chemical or physical means that will preferentially degrade the dispersant, such as but not limited to plasma, etching, enzymatic digestion, chemical oxidation, hydrolysis, and heating. One preferred method is by heating. Alternatively the dispersant may be removed by solvent dissolving the dispersant but not the GNRs, such as water.

After the graphene nanoribbons are deposited and/or aligned on the substrate, the nanoribbons may be cut to a uniform length. Methods that can be used to cut the nanoribbons include but are not limited to the utilization of ionized radiation including photon irradiation utilizing ionized radiation such as ultraviolet rays, X-rays, electron irradiation, ion-beam irradiation, plasma ionization, and neutral atoms machining, optionally through a photomask or a photoresist mask with a specific pattern.

Preferably, the substrate on which the purified graphene nanoribbons are deposited is a substrate of an electronic, optical or optoelectronic device. Exemplary devices include e.g. field effect transistors, photovoltaic devices or light-emitting devices.

Substrates useful in the present invention may comprise silicon, silicon dioxide, glass, metal, metal oxide, metal nitride, metal alloy, polymers, ceramics, and combinations thereof. Particularly suitable substrates will be comprised of for example, quartz glass, fused silica, alumina, graphite, mica, mesoporous silica, silicon wafer, nanoporous alumina, silica, titania, ZnO₂, HfO₂, SnO₂, Ta₂O₃, TaN, SiN, Si₃N₄, Al₂O₃, and ceramic plates. Preferably, the substrate is quartz glass or silicon wafer coated with one of the aforementioned isolators.

Optionally it may be useful to modify the surface of the solid substrate so that it will better receive and bind the nano-structures. For example the solid substrate, especially metal oxide surfaces, may be pre-treated, microetched or may be coated with materials for better nanostructure adhesion, alignment or to yield a cleaner interface between the surface and the nano-structure. Methods for coating SiO₂ and other oxide surfaces, e.g. with aminosilanes, alkylsilanes, or phosphonic acids, are known to the skilled person. Dispersed GNR will have better adhesion to hydrophobic surface structures and hydrophopization of the surface may thus be preferred.

As already discussed above, the liquid dispersion of purified graphene nanoribbons GNR1 may comprise individualized dispersant-coated graphene nanoribbons GNR1. Accordingly, with the method described above, it is possible to deposit individualized graphene nanoribbons on a substrate of e.g. an electronic, optical or optoelectronic device. Depending on the amount of purified graphene nanoribbons GNR1 in the liquid dispersant, the individualized dispersant-coated graphene nanoribbons being deposited on the substrate can be spaced apart from each other, or may be in contact via their dispersant coatings).

The deposition of an individual GNR in discrete and individual form on a surface allows using the individual GNR in an electronic device, e.g. in a transistor device.

When using dispersions of higher GNR concentration, the deposited GNR structures typically form substantially longitudinally aligned and substantially parallel "raft-like" or tape structures that are free of any contaminants. As used herein, "raft-like" or "tape" refers to arrays of nanoribbons arranged in various geometrically ordered configurations, including configurations where individual nanoribbons are placed generally parallel with respect to each other to form structures of monolayer or multilayer thicknesses. The alignment of GNR structures into substantially parallel "rafts" occurs due to repulsive forces induced by the dispersing agent coated surfaces of the structures. The highly ordered and separated alignment of individual nanoribbons facilitates easy characterization and manipulation of the GNR structures.

Another method for forming "raft-like" GNR structures is to immobilize the structures on a poly-hydroxylated surface. For example, dispersing agent coated GNR structures may be deposited on a surface coated with polyethylene glycol, e.g., a low molecular weight polyethylene glycol ("PEG") such as CarboWax® (Dow Chemical Co., South Charleston, W.Va.). Subsequent analysis reveals that the GNR structures remain in isolated form.

According to a further aspect, the present invention provides an electronic, optical or optoelectronic device, obtainable or obtained by the graphene nanoribbon deposition process described above.

Preferably, the device comprises a substrate on which individualized graphene nanoribbons are deposited. The individualized graphene nanoribbons can be dispersant-coated (i.e. have a dispersant coating). Alternatively, it is possible that the dispersant coating has been removed, e.g. by thermal treatment and/or solvent treatment, thereby resulting in non-coated individualized graphene nanoribbons. However, as these graphene nanoribbons are adsorbed on a solid substrate, they remain individualized (i.e. no direct contact between the graphene nanoribbons) even after removal of the dispersant coating.

The present invention is now described in further detail by the following examples.

### Examples

### Graphene nanoribbons GNR1 used for making graphene nanoribbon dispersions:

Structurally defined graphene nanoribbons are prepared according to synthetic procedures described in literature.

### Method (A):

Following Example 7 of WO 2013/093756, a composition comprising graphene nanoribbons GNR1 and unavoidable contaminants resulting from said manufacturing method was prepared in a solution based process via cyclodehydrogenation of a precursor polymer. The liquid reaction medium was subjected to a filtration step (i.e. a purification pre-treatment) and the GNR-containing composition to be purified was obtained in the form of a powder.

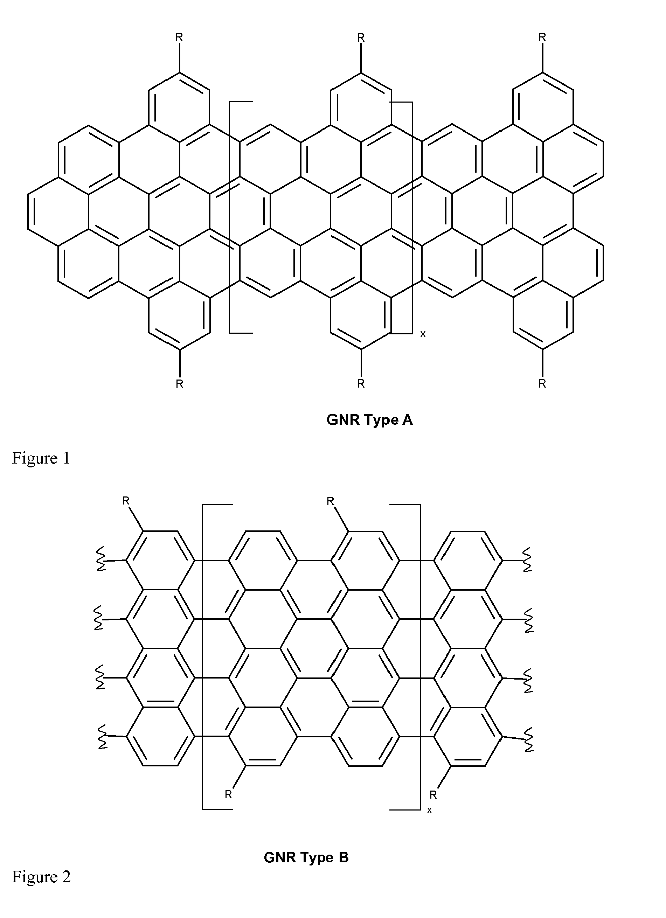

The structure of this type of graphene nanoribbon is shown in Figure 1 (in the following referred to as GNR structure type (A)). The part of the GNR structure representing the repeating unit RU is shown in Figure 1 as well.

### Method (B):

Following the preparation method described in J. Am. Chem. Soc. 2008, 130, 4216, a composition comprising graphene nanoribbons GNR1 and unavoidable contaminants resulting from said preparation method was provided by a solution-based process. The liquid reaction medium was subjected to a filtration step (i.e. a purification pre-treatment) and the GNR-containing composition to be purified was obtained in the form of a powder.

The structure of the type of graphene nanoribbons prepared via Methods (B) is shown in Figure 2 (in the following referred to as GNR structure type (B)). The part of the GNR structure representing the repeating unit RU is shown in Figure 2 as well.

### Method (C):

Following the surface-assisted preparation method described in Nature 466, 470-473 (2010), a composition comprising the target graphene nanoribbons GNR1 and unavoidable contaminants resulting from said preparation method is provided on a substrate surface. As the substrate is inconsistent with the intended application of the graphene nanoribbons in electronic devices, it also represents a contaminant to be separated from the graphene nanoribbons.

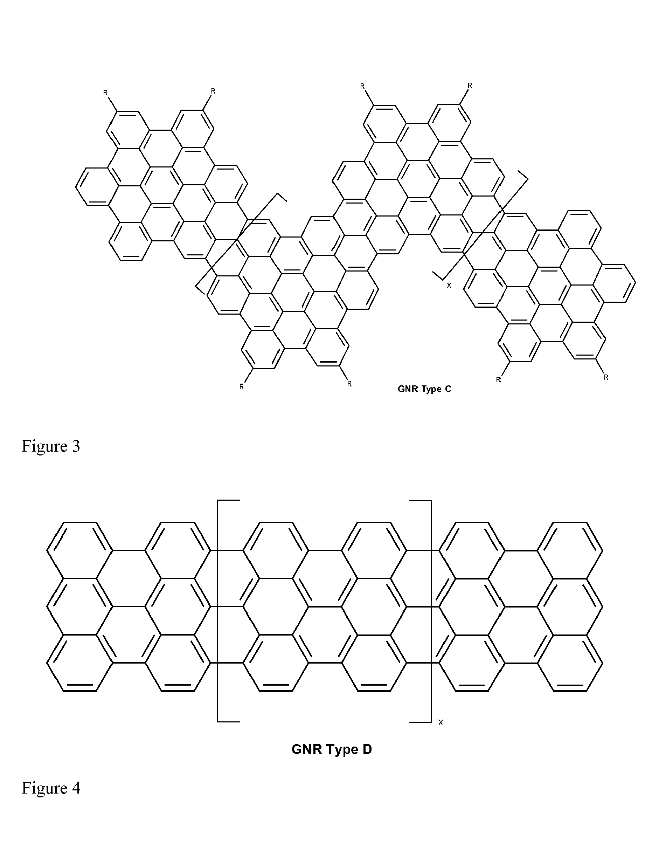

The structure of the type of graphene nanoribbons prepared via Methods (C) is shown in Figure 3 (in the following referred to as GNR structure type (C)). The part of the GNR structure representing the repeating unit RU is shown in Figure 3 as well.

### Method (D):

Following the surface-assisted preparation method described in Nature 466, 470-473 (2010), a composition comprising the target graphene nanoribbons GNR1 and unavoidable contaminants resulting from said preparation method is provided on a substrate surface. As the substrate is inconsistent with the intended application of the graphene nanoribbons in electronic devices, it also represents a contaminant to be separated from the graphene nanoribbons.

The structure of the type of graphene nanoribbons prepared via Method (D) is shown in Figure 4 (in the following referred to as GNR structure type (D)). The part of the GNR structure representing the repeating unit RU is shown in Figure 4 as well.

The target graphene nanoribbons to be isolated from the GNR-containing compositions are listed in Table 1.

**Table 1: Graphene nanoribbons to be purified**

| Example No. | Preparation method of GNR-containing composition | GNR Structure Type | Mol. Weight (M_{w}) | R |
|---|---|---|---|---|
| 1 | solution | A | 600'000 | C₁₂H₂₅ |
| 2 | solution | A | 600'000 | C₁₂H₂₅ |
| 3 | solution | A | 60'000 | C₁₂H₂₅ |
| 4 | solution | A | 60'000 | C₁₂H₂₅ |
| 5 | solution | B | 8'000 | C₁₂H₂₅ |
| 6 | solution | B | 14'000 | C₁₂H₂₅ |
| 7 | Surface | C | 20'000 | H |
| 8 | Surface | D | 14'000 | H |

### Preparation of purified GNR dispersions

For preparing purified GNR dispersions, the following general procedure was applied:

A solution of dispersant in DI water was added to the GNR-containing composition. Following a 20 pulse tip-sonication, the sample was placed into an Ultrasonic bath for 2 hours. An aqueous dispersion of the graphene nanoribbons GNR1 was obtained.

Subsequently, the solution was centrifuged for 3 min at 10000 rpm. The contaminants sedimented whereas the graphene nanoribbons GNR1 remained in a dispersed state. The purified graphene nanoribbons can be separated from the sedimented contaminants e.g. by decantation.

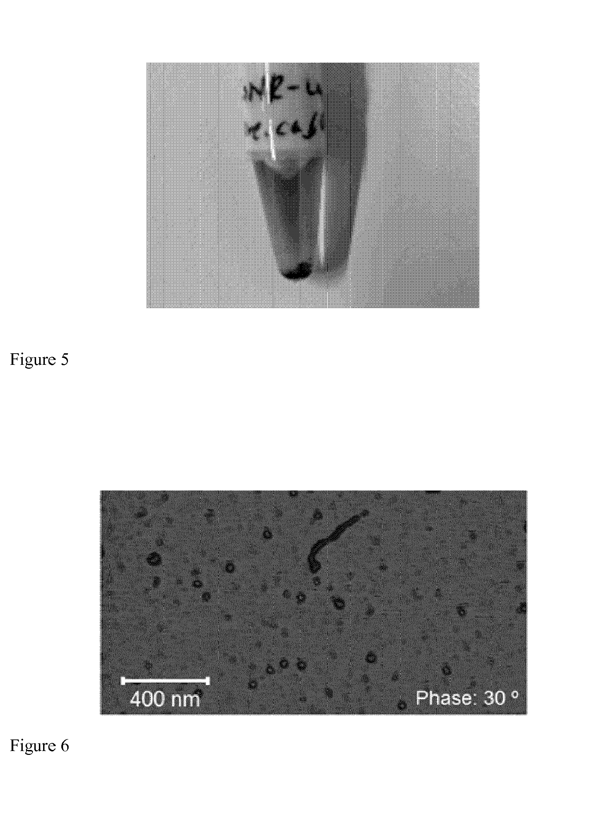

Figure 5 shows a centrifuge tube after centrifugation of the GNR1-containing dispersion. As can be seen from Figure 5, the contaminants have sedimented. The dispersant-coated graphene nanoribbons GNR1 remain in the liquid dispersion and can then be deposited on a substrate, thereby providing uniform GNR structures on a surface (e.g. of an electronic device), as will be described below.

Subsequently, these purified GNR dispersions were used for depositing the target GNR on a substrate. For depositing purified GNR on a substrate, the following general procedures were applied:

Degenerately doped silicon wafers coated with 30 nm of ALD (atomic layer deposited) Al₂O₃ and functionalized with n-octadecylphosphonic acid were used as substrate for deposition. Deposition of the GNRs was done using two different methods:
1.) Substrates were immersed for 12 h into the purified GNR dispersion. After removal of the samples from the solution, the samples were blowdried under a nitrogen stream, subsequently rinsed with DI-water and blowdried again.
2.) Substrates were placed on a hotplate at 120°C in ambient condition. The purified GNR dispersion was dropcast onto the hot substrate. Subsequently the substrate was rinsed with DI-water and then blowdried.

### Example 1: Dispersion of a GNR type A and deposition of purified GNR on a substrate by immersion

1wt% SDS (sodium dodecyl sulfate) / DI water solution was added to the GNR powder. A purified GNR dispersion was prepared according to the general procedure described above.

GNR deposition on a surface was performed according to general deposition procedure 1 described above. Figure 6 shows an atomic force microscopy image of the substrate surface. As can be seen from Figure 6, an individual isolated graphene nanoribbon with a length of about 500 nm is present on the substrate surface. With the purification method of the present invention, it is possible to provide isolated dispersant-coated graphene nanoribbons which are individually dispersed in the purified GNR dispersion. If such a purified GNR dispersion is applied onto a substrate, followed by removal of the liquid dispersion medium, individual graphene nanoribbons are provided on said substrate.

### Example 2: Dispersion of a GNR type A and deposition of purified GNR on a substrate by drop casting

A purified GNR dispersion is prepared as in example 1.

Deposition of purified GNRs on a surface was performed according to general deposition procedure 2 described above.

### Example 3: Dispersion of a GNR type A and deposition of purified GNR on a substrate by immersion

1wt% SDS (sodium dodecyl sulfate) / DI water solution was added to the GNR powder. GNR dispersion was prepared according to the general procedure described above.

Purified GNRs were deposited on a surface according to the general deposition procedure 1 described above.

### Example 4: Dispersion of a GNR type A and deposition of purified GNR on a substrate by drop casting

The graphene nanoribbons GNR1 used in Example 4 have a length of about 60 nm. The composition containing these graphene nanoribbons is subjected to the purification treatment described above.

A purified GNR dispersion is prepared as in example 3.

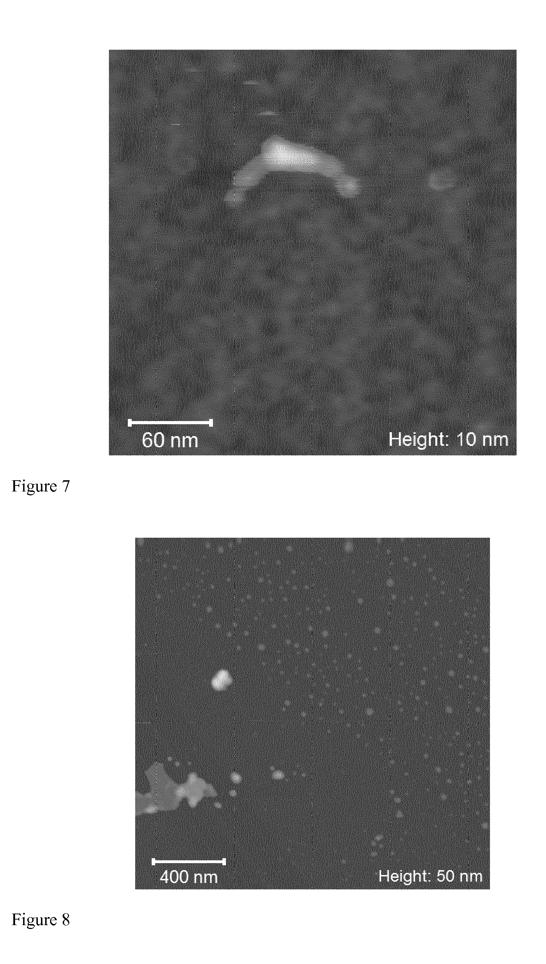

Deposition of GNRs on a surface was performed according to general deposition procedure 2 described above. Figure 7 shows an atomic force microscopy image of the substrate surface. As can be seen from Figure 7, an individual isolated graphene nanoribbon with a length of about 60 nm is present on the substrate surface (which corresponds to the length of the target graphene nanoribbons being present in the starting composition to be purified). With the purification method of the present invention, it is possible to provide isolated dispersant-coated graphene nanoribbons which are individually dispersed in the purified GNR dispersion. If such a purified GNR dispersion is applied onto a substrate, followed by removal of the liquid dispersion medium, individual graphene nanoribbons are provided on said substrate. Furthermore, as demonstrated by Example 4, the structure of the target graphene nanoribbons GNR1 is left intact (same ribbon length after deposition, i.e. no ribbon rupture or breakage) even if subjected to a high intensity sonication during the dispersion step.

### Comparative examples:

The graphene nanoribbons used in the Comparative Examples are listed below in Table 2.

**Table 2: GNRs used in the Comparative Examples**

| Comparative Example No. | GNR Preparation | GNR Type | Mol. Weight (M_{w}) | R |
|---|---|---|---|---|
| C1 | solution | A | 600'000 | C₁₂H₂₅ |
| C2 | solution | A | 600'000 | C₁₂H₂₅ |
| C3 | solution | A | 600'000 | C₁₂H₂₅ |
| C4 | solution | A | 600'000 | C₁₂H₂₅ |

### Preparation of GNR solution:

Chlorobenzene was added to the GNR powder. A clear solution was obtained.

### Deposition of GNR on a substrate:

Degenerately doped silicon wafers coated with 30 nm of ALD Al₂O₃ and functionalized with n-Octadecylphosphonic acid were used as substrate for deposition. Deposition of the GNRs was done using two different methods:
3.) Substrates were immersed for 24 h into the chlorobenzene GNR solution. After the removal of the samples from the solution the samples were blowdried under a nitrogen stream.
4.) Substrates were placed on a hotplate at the specified temperature in ambient condition. The GNR solution was dropcast onto the hot substrate. Subsequently the substrate was blowdried.

Comparative Example C1: Deposition of GNR type A on a substrate by immersion Deposition of GNRs on a surface was performed according to deposition procedure 3 described above. Figure 8 shows an atomic force microscopy image of the substrate surface. No graphene nanoribbons can be seen.

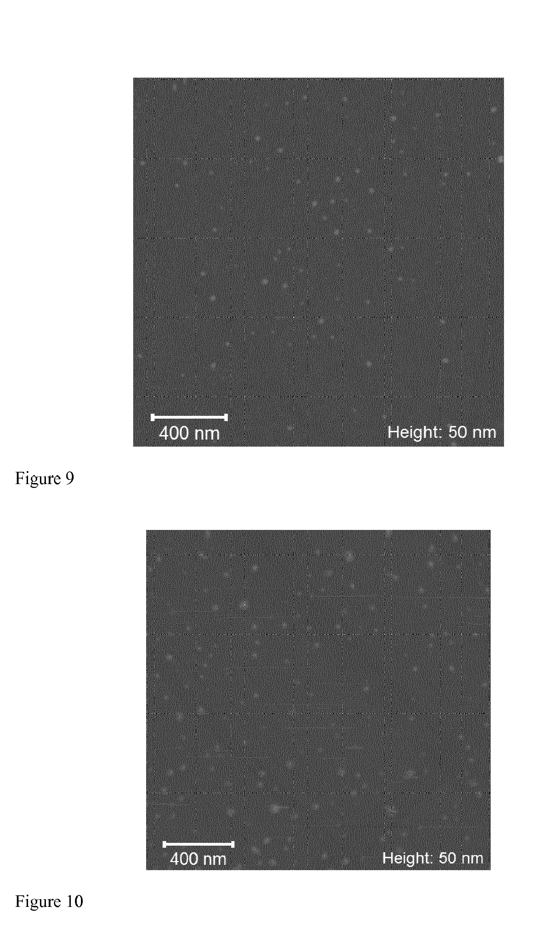

Comparative Example C2: Deposition of GNR type A on a substrate by drop casting Deposition of GNRs on a surface was performed according to deposition procedure 4 described above at 200 °C. Figure 9 shows an atomic force microscopy image of the substrate surface. No graphene nanoribbons can be seen.

Comparative Example C3: Deposition of GNR type A on a substrate by drop casting Deposition of GNRs on a surface was performed according to deposition procedure 4 described above at 150 °C. Figure 10 shows an atomic force microscopy image of the substrate surface. No graphene nanoribbons can be seen.

Comparative Example C4: Deposition of GNR type A on a substrate by drop casting Deposition of GNRs on a surface was performed according to deposition procedure 4 described above at 90 °C. Atomic force microscopy images of the substrate show no ribbon structures.

## Claims

1. A process for purifying graphene nanoribbons, which comprises
- bringing into contact a composition comprising graphene nanoribbons GNR1 and one or more contaminants with a liquid medium comprising a dispersant, and dispersing the graphene nanoribbons GNR1 in the liquid medium so as to obtain a liquid dispersion of the graphene nanoribbons GNR1,
- subjecting the liquid dispersion of the graphene nanoribbons GNR1 to a separation treatment so as to at least partly remove the one or more contaminants, thereby obtaining a liquid dispersion of purified graphene nanoribbons GNR1.

2. The process according to claim 1, wherein the graphene nanoribbons comprise a repeating unit, which is preferably derived from at least one polycyclic aromatic monomer compound and/or at least one oligophenylene aromatic monomer compound.

3. The process according to claim 1 or 2, wherein the one or more contaminants comprise non-reacted precursor molecules, non-reacted precursor polymers, polymeric reaction products having no graphene nanoribbon structure, agglomerates, metal residues, solid substrate materials, or any combination thereof.

4. The process according to one of the preceding claims, wherein the one or more contaminants comprise graphene nanoribbons GNR2 which are different from the graphene nanoribbons GNR1, the graphene nanoribbons GNR1 and GNR2 preferably differing at least in one of the properties selected from ribbon width, ribbon length, ribbon-edge-located substituents, degree of cyclodehydrogenation, repeating unit, number of ribbon segments or ribbon blocks, heteroatomic substitution modification, vacancy modification, or any combination thereof.

5. The process according to one of the preceding claims, wherein the dispersant is selected from a surfactant, an emulsifying agent, a chaotropic salt, a block copolymer, a polyelectrolyte, a protein, deoxyribonucleic acid, ribonucleic acid, or any combination thereof.

6. The process according to one of the preceding claims, wherein the graphene nanoribbons GNR1 are dispersed in the liquid medium under ultrasonication.

7. The process according to one of the preceding claims, wherein the separation treatment comprises filtration, centrifugation, density gradient centrifugation, chromatography, electrophoresis, sedimentation, or any combination thereof.

8. The process according to one of the preceding claims, wherein the liquid dispersion of purified graphene nanoribbons GNR1 is subjected to a post-treatment for removing excess dispersant.

9. A liquid dispersion of purified graphene nanoribbons GNR1, obtainable by the process according to one of the claims 1 to 8.

10. The liquid dispersion according to claim 9, comprising individualized dispersant-coated graphene nanoribbons GNR1.

11. The liquid dispersion according to claim 9 or 10, wherein at least 50% of the purified graphene nanoribbons GNR1 are individualized dispersant-coated graphene nanoribbons.

12. A process for depositing graphene nanoribbons, which comprises:
- providing a liquid dispersion of purified graphene nanoribbons GNR1 according to one of the claims 1 to 11, and
- depositing the purified graphene nanoribbons GNR1 on a substrate.

13. The process according to claim 12, wherein the purified graphene nanoribbons GNR1 are deposited on the substrate by spin coating, drop casting, zone casting, immersion coating, dip coating, blade coating, spraying, printing, or any combination thereof.

14. The process according to claim 12 or 13, wherein the purified nanoribbons GNR1 are fixed to the substrate, preferably by thermal treatment; and/or the dispersant is removed from the purified graphene nanoribbons GNR1 after deposition on the substrate.

15. The process according to one of the claims 12 to 14, wherein the substrate is a substrate of an electronic, optical or optoelectronic device.

16. An electronic, optical or optoelectronic device, obtainable by the process according to one of the claims 12 to 15.
